Europäisches Patentamt

European Patent Office

Office européen des brevets

(19)

(11) **EP 1 140 718 B1**

(12) **FASCICULE DE BREVET EUROPEEN**

(45) Date de publication et mention
de la délivrance du brevet:
**20.08.2003 Bulletin 2003/34**

(21) Numéro de dépôt: **99964559.1**

(22) Date de dépôt: **13.12.1999**

(51) Int Cl.⁷: **C03C 3/087**, C03C 3/095,
C03C 4/02, C03C 4/08

(86) Numéro de dépôt international:
**PCT/EP99/09849**

(87) Numéro de publication internationale:
**WO 00/037372 (29.06.2000 Gazette 2000/26)**

(54) **VERRE SODO-CALCIQUE A NUANCE BLEUE**

NATRONKALKGLAS MIT BLAUSTICH

SODA-LIME GLASS WITH BLUE SHADE

(84) Etats contractants désignés:
**AT BE CH CY DE DK ES FI FR GB GR IE IT LI LU
MC NL PT SE**

(30) Priorité: **22.12.1998 EP 98124371**

(43) Date de publication de la demande:
**10.10.2001 Bulletin 2001/41**

(73) Titulaire: **GLAVERBEL**
**B-1170 Bruxelles (BE)**

(72) Inventeurs:
• **FOGUENNE, Marc**
**B-5081 Saint-Denis (BE)**
• **COSTER, Dominique**
**B-5020 Temploux (BE)**

(74) Mandataire: **Le Vaguerèse, Sylvain**
**Glaverbel,**
**Department Intellectual Property,**
**Centre R. & D.,**
**Rue de l'Aurore, 2**
**6040 Jumet (BE)**

(56) Documents cités:
**EP-A- 0 536 049 EP-A- 0 887 320**
**GB-A- 2 304 709 US-A- 5 411 922**

## Description

La présente invention concerne un verre sodo-calcique coloré à nuance bleue, composé de constituants principaux, formateurs de verre et d'agents colorants.

L'expression "verre sodo-calcique" est utilisée ici dans le sens large et concerne tout verre qui contient les constituants suivants (pourcentages en poids):

| | |
|---|---|
| $Na_2O$ | 10 à 20 % |
| CaO | 0 à 16 % |
| $SiO_2$ | 60 à 75 % |
| $K_2O$ | 0 à 10 % |
| MgO | 0 à 10 % |
| $Al_2O_3$ | 0 à 5 % |
| BaO | 0 à 2 % |
| BaO + CaO + MgO | 10 à 20 % |
| $K_2O + Na_2O$ | 10 à 20 % |

Ce type de verre trouve un très large usage dans le domaine des vitrages pour le bâtiment ou l'automobile, par exemple. On le fabrique couramment sous forme de ruban par le procédé de flottage. Un tel ruban peut être découpé en feuilles qui peuvent ensuite être bombées ou subir un traitement de renforcement de leurs propriétés mécaniques, par exemple une trempe thermique.

Il est en général nécessaire de rapporter les propriétés optiques d'une feuille de verre à un illuminant standard. Dans la présente description, on utilise 2 illuminants standards. L'illuminant C et l'illuminant A définis par la Commission Internationale de l'Eclairage (C.I.E.). L'illuminant C représente la lumière du jour moyenne ayant une température de couleur de 6700 K. Cet illuminant est surtout utile pour évaluer les propriétés optiques des vitrages destinés au bâtiment. L'illuminant A représente le rayonnement d'un radiateur de Planck à une température d'environ 2856 K. Cet illuminant figure la lumière émise par des phares de voiture et est essentiellement destiné à évaluer les propriétés optiques des vitrages destinés à l'automobile. La Commission Internationale de l'Eclairage a également publié un document intitulé "Colorimétrie, Recommandations Officielles de la C.I.E." (mai 1970) qui décrit une théorie selon laquelle les coordonnées colorimétriques pour la lumière de chaque longueur d'onde du spectre visible sont définies de manière à pouvoir être représentées sur un diagramme ayant des axes orthogonaux x et y, appelé diagramme trichromatique C.I.E. 1931. Ce diagramme trichromatique montre le lieu représentatif de la lumière de chaque longueur d'onde (exprimée en nanomètres) du spectre visible. Ce lieu est appelé "spectrum locus" et la lumière dont les coordonnées se placent sur ce spectrum locus est dite posséder 100 % de pureté d'excitation pour la longueur d'onde appropriée. Le spectrum locus est fermé par une ligne appelée ligne des pourpres qui joint les points du spectrum locus dont les coordonnées correspondent aux longueurs d'onde 380 nm (violet) et 780 nm (rouge). La surface comprise entre le spectrum locus et la ligne des pourpres est celle disponible pour les coordonnées trichromatiques de toute lumière visible. Les coordonnées de la lumière émise par l'illuminant C par exemple, correspondent à x = 0,3101 et y = 0,3162. Ce point C est considéré comme représentant de la lumière blanche et de ce fait a une pureté d'excitation égale à zéro pour toute longueur d'onde. Des lignes peuvent être tirées depuis le point C vers le spectrum locus à toute longueur d'onde désirée et tout point situé sur ces lignes peut être défini non seulement par ses coordonnées x et y, mais aussi en fonction de la longueur d'onde correspondent à la ligne sur laquelle il se trouve et de sa distance depuis le point C rapportée à la longueur totale de la ligne de longueur d'onde. Dès lors, la teinte de la lumière transmise par une feuille de verre coloré peut être décrite par sa longueur d'onde dominante et sa pureté d'excitation exprimée en pour-cent.

Les coordonnées C.I.E. de lumière transmise par une feuille de verre coloré dépendront non seulement de la composition du verre mais aussi de son épaisseur. Dans la présente description, ainsi que dans les revendications, toutes les valeurs de la pureté d'excitation P et de la longueur d'onde dominante $\lambda_D$ de la lumière transmise sont calculées à partir des transmissions spécifiques internes spectrales $(TSI_\lambda)$ d'une feuille de verre de 5 mm d'épaisseur. La transmission spécifique interne spectrale d'une feuille de verre est régie uniquement par l'absorption du verre et peut être exprimée par la loi de Beer-Lambert:

$$TSI_\lambda = e^{-E,A\lambda}$$

où $A_\lambda$ est le coefficient d'absorption du verre (en cm$^{-1}$) à la longueur d'onde considérée et E l'épaisseur du verre (en cm). En première approximation, TSI$_\lambda$ peut également être représenté par la formule

$$(I_3 + R_2) / (I_1 - R_1)$$

où I$_1$ est l'intensité de la lumière visible incidente à une première face de la feuille de verre, R$_1$ est l'intensité de la lumière visible réfléchie par cette face, I$_3$ est l'intensité de la lumière visible transmise à partir de la seconde face de la feuille de verre et R$_2$ est l'intensité de la lumière visible réfléchie vers l'intérieur de la feuille par cette seconde face.

Dans la description qui suit ainsi que dans les revendications, on utilise encore:

- la transmission lumineuse totale pour l'illuminant A (TLA), mesurée pour une épaisseur de 4 mm (TLA4). Cette transmission totale est le résultat de l'intégration entre les longueurs d'onde de 380 et 780 nm de l'expression: $\Sigma$ T$_\lambda$.E$_\lambda$.S$_\lambda$ / $\Sigma$ E$_\lambda$.S$_\lambda$ dans laquelle T$_\lambda$ est la transmission à la longueur d'onde $\lambda$, E$_\lambda$ est la distribution spectrale de l'illuminant A et S$_\lambda$ est la sensibilité de l'oeil humain normal en fonction de la longueur d'onde $\lambda$.
- la transmission énergétique totale (TE), mesurée pour une épaisseur de 4 mm (TE4). Cette transmission totale est le résultat de l'intégration entre les longueurs d'onde 300 et 2500 nm de l'expression: $\Sigma$ T$_\lambda$.E$_\lambda$ / $\Sigma$ E$_\lambda$ dans laquelle E$_\lambda$ est la distribution énergétique spectrale du soleil à 30° au dessus de l'horizon.
- la sélectivité (SE), mesurée par le rapport de la transmission lumineuse totale pour l'illuminant A et de la transmission énergétique totale (TLA/TE).
- la transmission totale dans l'ultraviolet, mesurée pour une épaisseur de 4 mm (TUV4). Cette transmission totale est le résultat de l'intégration entre 280 et 380 nm de l'expression: $Z$ T$_\lambda$.U$_\lambda$ / $\Sigma$ U$_\lambda$. dans laquelle U$_\lambda$ est la distribution spectrale du rayonnement ultraviolet ayant traversé l'atmosphère, déterminée dans la norme DIN 67507.

La présente invention concerne en particulier des verres sélectifs à nuance bleue. Ces verres peuvent être utilisés dans des applications architecturales ainsi que comme vitrages de wagons de chemin de fer et véhicules automobiles. En application architecturale, des feuilles de verre de 4 à 6 mm d'épaisseur seront généralement utilisées alors que dans le domaine automobile des épaisseurs de 1 à 5 mm sont couramment employées, en particulier pour la réalisation de vitrages latéraux et de toits ouvrants.

L'invention consiste en un verre coloré sodo-calcique à nuance bleue composé de constituants principaux formateurs de verre dont plus de 2% d'oxyde de magnésium et d'agents colorants, caractérisé en ce qu'il contient plus de 1.1% en poids de Fe2O3, moins de 0.53% en poids de FeO, moins de 0.13% d'oxyde de manganèse, possède une transmission lumineuse (TLA4) comprise entre 15% et 70%, une sélectivité (SE4) supérieure à 1.2 et présente une longueur d'onde dominante ($\lambda_D$) et une pureté d'excitation (P) telles qu'elles se situent dans un diagramme trichromatique CIE 1931 à l'intérieur d'un triangle dont les sommets sont définis par le point représentant la source d'illuminant C et les points dont les coordonnées ($\lambda_D$, P) sont respectivement (490,19) et (476, 49).

La combinaison de ces propriétés optiques est particulièrement avantageuse en ce qu'elle offre une nuance de couleur particulièrement esthétique tout en assurant une transmission suffisante de la lumière à travers du verre et une sélectivité élevée qui permet de limiter l'échauffement intérieur des volumes délimités par des vitrages selon l'invention.

Il est souhaitable que composants principaux formateurs du verre selon l'invention comprennent une concentration en MgO de plus de 2 % car ce composé favorise la fusion desdits constituants.

Quant au fer, il est présent dans la plupart des verres existant sur le marché, soit en tant qu'impureté, soit introduit délibérément comme agent colorant. La présence de Fe$^{3+}$ confère au verre une légère absorption de la lumière visible de faible longueur d'onde (410 et 440 nm) et une très forte bande d'absorption dans l'ultraviolet (bande d'absorption centrée sur 380 nm), tandis que la présence d'ions Fe$^{2+}$ provoque une forte absorption dans l'infrarouge (bande d'absorption centrée sur 1050 nm). Dès lors, lorsque la concentration en Fe$^{2+}$ augmente, la valeur de TE diminue, ce qui fait augmenter celle de SE. Par ailleurs, les ions ferriques donnent au verre une légère coloration jaune, tandis que les ions ferreux donnent une coloration bleu vert plus prononcée. La teneur élevée en Fe2O3 du verre selon l'invention le rend donc bien étanche au rayonnement ultraviolet et sa faible teneur en FeO implique que le verre peut être réalisé au moyen d'un four traditionnel, pouvant être de grande capacité car son absorption limitée du rayonnement infrarouge ne fait pas obstacle à la diffusion de la chaleur dans un tel four. Or, l'utilisation de ce type de four est économique comparativement à celle de petits fours électriques auxquels il doit être habituellement recouru dans la fabrication de verres hautement sélectifs. Dans de tels cas en effet, les teneurs élevées en FeO le rendent difficile à fondre, nécessitant habituellement l'utilisation de fours électriques de faibles capacités..

Dans le but d'obtenir une sélectivité élevée, le verre selon l'invention contient également moins de 0.13% de MnO2 car cet agent par son rôle oxydant est défavorable à la sélectivité.

De préférence, le verre coloré selon la l'invention possède une longueur d'onde dominante ($\lambda_D$) et une pureté d'excitation (P) telles qu'elles se situent dans un diagramme trichromatique CIE 1931 à l'intérieur d'un triangle dont les sommets sont définis par le point représentant la source d'illuminant C et les points dont les coordonnées ($\lambda_D$, P) sont respectivement (490,19) et (480,38). Ceci correspond à des colorations considérées comme particulièrement esthétiques.

Plus préférablement encore, le verre selon l'invention possède une longueur d'onde dominante inférieure à 489 nm et/ou une pureté supérieure à 12%, ce qui correspond à des teintes particulièrement appréciées.

De préférence également, le verre selon l'invention offre une TUV4 inférieure à 10%. Une telle valeur permet d'éviter toute décoloration des objets situés dans un volume délimité par une surface vitrée par du verre selon l'invention. Cette propriété est particulièrement avantageuse dans le secteur automobile. Une faible transmission du rayonnement ultraviolet permet en effet d'éviter le vieillissement et la décoloration des garnitures intérieures des véhicules, constamment exposées à l'action du soleil.

Il est souhaitable que le verre selon l'invention présente une valeur rédox (Fe2+/Fetot) inférieure à 41%. De telles valeurs rendent le verre particulièrement facile à fondre dans des fours de verrerie classiques.

De préférence, le verre selon l'invention comprend en tant qu'agent colorant l'un au moins des éléments chrome, cobalt, cérium, titane, sélénium et vanadium. L'utilisation de ces éléments permet d'ajuster les propriétés optiques du verre de façon optimale et contribue à obtenir un verre hautement sélectif.

On peut produire du verre ayant une coloration similaire à celle du verre selon l'invention en utilisant du nickel comme principal agent colorant. La présence de nickel présente cependant des inconvénients, spécialement lorsque le verre doit être produit par le procédé de flottage. Dans ce procédé, un ruban de verre chaud est acheminé le long de la surface d'un bain d'étain fondu de sorte que ses faces soient planes et parallèles. Afin d'éviter l'oxydation de l'étain à la surface du bain, qui conduirait à l'entraînement d'oxyde d'étain par le ruban, une atmosphère réductrice est maintenue au-dessus du bain. Lorsque le verre contient du nickel, celui-ci est partiellement réduit par cette atmosphère, ce qui donne naissance à un voile dans le verre produit. Cet élément est également peu propice à l'obtention d'une valeur élevée de la sélectivité du verre qui le contient car il n'absorbe pas la lumière dans le domaine de l'infra-rouge ce qui conduit à une valeur de TE importante. De plus, le nickel présent dans le verre peut donner lieu à la formation de NiS. Ce sulfure existe sous diverses formes cristallines, stables dans des domaines de températures différents, et dont les transformations l'une en l'autre sont néfastes lorsque le verre est renforcé par un traitement de trempe thermique, comme c'est le cas dans le domaine de l'automobile et pour certaines applications architecturales (balcons, allèges, ...). Dès lors, le verre selon l'invention ne contient pas de nickel.

Les effets des différents agents colorants envisagés individuellement, pour l'élaboration d'un verre sont les suivants (selon "Le Verre" de H. Scholze - traduit par J. Le Dû - Institut du Verre - Paris):

Cobalt: Le groupe $Co^{II}O_4$ produit une coloration bleu intense avec une longueur d'onde dominante quasi opposée à celle donnée par le chromophore fer-sélénium.

Chrome: La présence du groupe $Cr^{III}O_6$ donne naissance à des bandes d'absorption à 650 nm et donne une couleur vert clair. Une oxydation plus poussée donne naissance au groupe $Cr^{VI}O_4$ qui provoque une bande d'absorption très intense à 365 nm et donne une coloration jaune.

Cérium: La présence des ions cérium dans la composition permet d'obtenir une forte absorption dans le domaine ultra violet. L'oxyde de cérium existe sous deux formes: $Ce^{IV}$ absorbe dans l'ultra violet autour de 240 nm et $Ce^{III}$ absorbe dans l'ultra violet autour de 314 nm.

Sélénium: Le cation $Se^{4+}$ n'a pratiquement pas d'effet colorant, tandis que l'élément non chargé SeO donne une coloration rose. L'anion $Se^{2-}$ forme un chromophore avec les ions ferriques présents et confère de ce fait une couleur brun-rouge au verre.

Vanadium: Pour des teneurs croissantes en oxydes alcalins, la couleur vire du vert à l'incolore, ce qui est provoqué par l'oxydation du groupe $V^{III}O_6$ en $V^VO_4$.

Manganèse: apparaît dans le verre sous forme de $Mn^{II}O_6$ pratiquement incolore. Les verres riches en alcalin présentent toutefois une couleur violette à cause du groupe $Mn^{III}O_6$.

Titane: Le TiO2 dans les verres leur donne une coloration jaune. Pour de grandes quantités on peut même obtenir par réduction le groupe $Ti^{III}O_6$ qui colore en violet, voire en marron.

Les propriétés énergétiques et optiques d'un verre contenant plusieurs agents colorants résultent donc d'une interaction complexe entre ceux-ci. En effet, ces agents colorants ont un comportement qui dépend fortement de leur état rédox et donc de la présence d'autres éléments susceptibles d'influencer cet

De préférence, le verre selon l'invention offre une sélectivité (SE4) supérieure à 1.6. Il est particulièrement remarquable d'obtenir un verre offrant une séléctivité si élevée alors qu'il présente une faible limite supérieure de la teneur en poids en FeO.

Un verre selon l'invention peut comprendre les pourcentages en poids en agents colorants suivants, la quantité totale de fer étant exprimée sous forme de $Fe_2O_3$:

| Fe$_2$O$_3$ | 1.2 à 1.6 % |
|---|---|
| FeO | 0.34 à 0.50 % |
| Co | 0.0030 à 0.0100 % |
| Cr$_2$O$_3$ | 0 à 0.0200 % |
| V$_2$O$_5$ | 0 à 0.0500 % |
| Se | 0 à 0.0020 % |
| CeO$_2$ | 0 à 0.5 % |
| TiO2 | 0 à 1.5 % |

Les éléments cérium et vanadium sont tout deux favorables à l'obtention de la faible valeur de transmission du rayonnement ultraviolet et infrarouge du verre selon l'invention. Quant à l'utilisation de chrome et de cérium, elle n'est pas défavorable à la préservation des parois réfractaires du four de fabrication du verre vis à vis desquelles ces éléments ne présentent pas de risques de corrosion.

De préférence cependant, le nombre d'agents colorants présents dans un tel verre est limité de manière à en faciliter la production. En particulier, il peut être avantageux d'éviter d'utiliser le sélénium qui est cher et s'incorpore dans le verre avec un faible rendement.

Dès lors, de préférence, ce verre peut comprendre les pourcentages en poids en agents colorants suivants, la quantité totale de fer étant exprimée sous forme de Fe$_2$O$_3$:

| Fe$_2$O$_3$ | 1.2 à 1.5 % |
|---|---|
| FeO | 0.34 à 0.45 % |
| Co | 0.0030 à 0.0100 % |
| Cr$_2$O$_3$ | 0 à 0.0150 % |
| V$_2$O$_5$ | 0 à 0.0400 % |

A ces compositions sont associées les propriétés optiques suivantes:

35 % < TLA4 < 45 %

20 % < TE4 < 30 %

TUV4 < 9 %

$\lambda_D$ > 483 nm

P> 12 %

La gamme de transmission lumineuse ainsi définie rend le verre selon l'invention particulièrement utile pour éviter l'éblouissement par la lumière des phares d'automobiles lorsqu'il est utilisé pour des vitrages latéraux arrières ou comme lunette arrière de véhicules. La gamme de transmission énergétique correspondante apporte elle au verre sa haute sélectivité.

Un verre présentant les propriétés optiques ci-dessus est particulièrement approprié en tant que vitrage latéral arrière et lunette arrière de véhicules automobiles.

Un autre verre selon l'invention peut comprendre les pourcentages en poids en agents colorants suivants, la quantité totale de fer étant exprimée sous forme de Fe$_2$O$_3$ :

| Fe$_2$O$_3$ | 1.3 à 1.8 % |
|---|---|
| FeO | 0.30 à 0.50 % |
| Co | 0.0160 à 0.0270 % |
| Cr$_2$O$_3$ | 0 à 0.0200 % |
| V$_2$O$_5$ | 0 à 0.0500 % |
| Se | 0 à 0.0040 % |
| CeO$_2$ | 0 à 0.5 % |

A ces gammes de compositions sont associées les propriétés optiques suivantes :

16 % < TLA4 < 24%

12 % < TE4 < 18 %

TUV4 < 5 %

476 < $\lambda_D$ < 483 nm

P > 18 %

De tels verres conviennent particulièrement à la réalisation de toits ouvrants de véhicules automobiles.

Le verre selon l'invention peut être revêtu d'une couche d'oxydes métalliques réduisant son échauffement par le rayonnement solaire et par conséquent celui de l'habitacle d'un véhicule utilisant un tel verre comme vitrage.

Les verres selon la présente invention peuvent être fabriqués par des procédés traditionnels. En tant que matières premières, on peut utiliser des matières naturelles, du verre recyclé, des scories ou une combinaison de ces matières. Les colorants ne sont pas nécessairement ajoutés dans la forme indiquée, mais cette manière de donner les quantités d'agents colorants ajoutées, en équivalents dans les formes indiquées, répond à la pratique courante. En pratique, le fer est ajouté sous forme de potée, le cobalt est ajouté sous forme de sulfate hydraté, tel que $CoSO_4.7H_2O$ ou $CoSO_4.6H_2O$, le chrome est ajouté sous forme de bichromate tel que $K_2Cr_2O_7$. Le cérium est introduit sous forme d'oxyde ou de carbonate. Quant au vanadium, on l'introduit sous forme d'oxyde ou de vanadate de sodium. Le sélénium, lorsqu'il est présent, est ajouté sous forme élémentaire ou sous forme de sélénite tel que $Na_2SeO_3$ ou $ZnSeO_3$.

D'autres éléments sont parfois présents en tant qu'impuretés dans les matières premières utilisées pour fabriquer le verre selon l'invention que ce soit dans les matières naturelles, dans le verre recyclé ou dans les scories, mais lorsque ces impuretés ne confèrent pas au verre des propriétés se situant hors des limites définies ci-dessus, ces verres sont considérés comme conformes à la présente invention. La présente invention sera illustrée par les exemples spécifiques de propriétés optiques et de compositions qui suivent.

## EXEMPLES 1 à 88

Le tableau I donne à titre indicatif et non limitatif la composition de base du verre ainsi que les constituants de la charge vitrifiable à fondre pour produire les verres selon l'invention. Les tableaux IIa, IIb, IIc, IId donnent les propriétés optiques et les proportions en poids des agents colorants d'un verre comprenant respectivement le sélénium, le cérium, le titane ou aucun de ces éléments parmi ses agents colorants. Ces proportions sont déterminées par fluorescence X du verre et converties en l'espèce moléculaire indiquée.

Le mélange vitrifiable peut, si nécessaire, contenir un agent réducteur tel que du coke, du graphite ou du laitier ou un agent oxydant tel que du nitrate. Dans ce cas, les proportions des autres matériaux sont adaptées afin que la composition du verre demeure inchangée.

TABLEAU I

| Analyse du verre de base | | Constituants du verre de base | |
|---|---|---|---|
| | | | |
| $SiO_2$ | 71.5 à 71.9 % | Sable | 571.3 |
| $Al_2O_3$ | 0.8 % | Feldspath | 29.6 |
| CaO | 8.8 % | Chaux | 35.7 |
| MgO | 4.2% | Dolomie | 167.7 |
| $Na_2O$ | 14.1 % | $Na_2CO_3$ | 189.4 |
| $K_2O$ | 0.1 % | Sulfate | 5.0 |
| $SO_3$ | 0.05 à 0.45 % | | |

## TABLEAU IIa

| N° ex. | Fe2O3 (%) | FeO (%) | Co (ppm) | Cr2O3 (ppm) | V2O5 (ppm) | Se (ppm) | MnO2 (ppm) | TLA4 (%) | TE4 (%) | TUV4 (%) | SE4 | $\lambda_D$ (nm) | P (%) |
|---|---|---|---|---|---|---|---|---|---|---|---|---|---|
| 1 | 1.55 | 0.42 | 100 | traces | 102 | 10 | 50 | 29.47 | 17.62 | 2.99 | 1.67 | 488.89 | 15.13 |
| 2 | 1.65 | 0.45 | 108 | 25 | traces | 5 | 75 | 27.78 | 15.93 | 2.45 | 1.74 | 488.26 | 19.32 |
| 3 | 1.51 | 0.42 | 88 | 15 | 58 | 8 | 100 | 32.04 | 18.55 | 3.44 | 1.72 | 489.59 | 14.90 |
| 4 | 1.62 | 0.43 | 120 | traces | traces | 12 | 50 | 25.27 | 15.73 | 2.51 | 1.60 | 487.5 | 16.84 |
| 5 | 1.39 | 0.47 | 54 | traces | traces | 5 | 100 | 37.32 | 19.12 | 4.87 | 1.95 | 489.94 | 15.62 |
| 6 | 1.42 | 0.49 | 65 | traces | traces | 4 | 150 | 35.19 | 17.84 | 4.70 | 1.97 | 488.54 | 18.60 |
| 7 | 1.40 | 0.32 | 88 | traces | traces | 2 | 200 | 38.78 | 24.33 | 4.15 | 1.59 | 487.09 | 17.59 |
| 8 | 1.72 | 0.49 | 121 | 25 | traces | 14 | 60 | 21.39 | 12.38 | 1.91 | 1.72 | 489.28 | 15.64 |
| 9 | 1.68 | 0.49 | 145 | 25 | 50 | 20 | 80 | 16.61 | 10.91 | 2.06 | 1.52 | 487.28 | 16.40 |
| 10 | 1.44 | 0.38 | 72 | traces | traces | 2 | 90 | 38.40 | 22.18 | 4.04 | 1.73 | 488.94 | 16.27 |
| 11 | 1.39 | 0.45 | 65 | traces | traces | 5 | 75 | 36.55 | 19.51 | 4.80 | 1.87 | 488.72 | 16.93 |
| 12 | 1.41 | 0.39 | 84 | traces | traces | 12 | 150 | 33.84 | 20.33 | 4.31 | 1.66 | 489.15 | 12.65 |
| 13 | 1.81 | 0.47 | 135 | 41 | 10 | 12 | 120 | 19.31 | 11.78 | 1.05 | 1.63 | 489.08 | 17.07 |
| 14 | 1.91 | 0.45 | 146 | 36 | 21 | 2 | 30 | 19.95 | 12.15 | 0.10 | 1.64 | 487.59 | 23.76 |
| 15 | 1.89 | 0.42 | 147 | traces | traces | 8 | 65 | 19.53 | 12.81 | 0.10 | 1.52 | 487.64 | 19.73 |
| 16 | 1.29 | 0.33 | 80 | 17 | 25 | 6 | 45 | 39.42 | 24.69 | 6.88 | 1.59 | 488.06 | 14.97 |
| 17 | 1.27 | 0.45 | 51 | traces | traces | 7 | 60 | 38.42 | 18.71 | 7.70 | 2.05 | 489.79 | 14.49 |
| 18 | 1.15 | 0.31 | 78 | traces | 12 | 12 | 80 | 40.14 | 26.05 | 8.39 | 1.54 | 487.39 | 12.25 |
| 19 | 1.31 | 0.38 | 95 | traces | traces | 8 | 90 | 33.74 | 20.49 | 6.86 | 1.64 | 486.41 | 18.22 |

| N° ex. | Fe2O3 (%) | FeO (%) | Co (ppm) | Cr2O3 (ppm) | V2O5 (ppm) | Se (ppm) | MnO2 (ppm) | TLA4 (%) | TE4 (%) | TUV4 (%) | SE4 | λD (nm) | P (%) |
|---|---|---|---|---|---|---|---|---|---|---|---|---|---|
| 20 | 1.39 | 0.45 | 77 | traces | traces | 3 | 100 | 35.44 | 19.22 | 4.75 | 1.84 | 487.21 | 20.43 |
| 21 | 1.41 | 0.39 | 102 | traces | 15 | 15 | 150 | 30.41 | 19.19 | 4.21 | 1.58 | 487.33 | 13.85 |
| 22 | 1.65 | 0.42 | 145 | 41 | 10 | 7 | 250 | 22.76 | 15.07 | 2.22 | 1.51 | 485.87 | 23.40 |
| 23 | 1.91 | 0.45 | 146 | traces | traces | 5 | 300 | 19.48 | 12.06 | 0.03 | 1.61 | 487.35 | 22.24 |
| 24 | 1.89 | 0.42 | 147 | traces | traces | 2 | 450 | 21.25 | 13.49 | 0.10 | 1.57 | 486.87 | 23.86 |
| 25 | 1.21 | 0.34 | 148 | 26 | traces | 34 | 200 | 22.01 | 16.72 | 0.17 | 1.31 | 489.51 | 11.67 |
| 26 | 1.34 | 0.38 | 175 | 23 | traces | 36 | 150 | 17.62 | 13.10 | 0.45 | 1.34 | 488.64 | 10.39 |
| 27 | 1.35 | 0.34 | 176 | 22 | traces | 32 | 50 | 17.32 | 14.02 | 0.23 | 1.23 | 489.25 | 8.85 |
| 28 | 1.23 | 0.36 | 210 | traces | traces | 28 | 75 | 13.70 | 10.63 | 0.04 | 1.28 | 485.77 | 11.51 |
| 29 | 1.31 | 0.34 | 204 | traces | traces | 28 | 90 | 15.09 | 12.56 | 0.08 | 1.20 | 484.49 | 12.75 |
| 30 | 1.32 | 0.34 | 230 | 10 | traces | 8 | 60 | 20.11 | 14.59 | 0.01 | 1.37 | 483.25 | 28.35 |
| 31 | 1.50 | 0.32 | 195 | 12 | traces | 12 | 250 | 22.13 | 17.19 | 0.23 | 1.28 | 487.62 | 15.01 |
| 32 | 1.78 | 0.35 | 205 | traces | traces | 5 | 300 | 21.72 | 15.04 | 0.19 | 1.44 | 488.9 | 16.91 |
| 33 | 1.82 | 0.34 | 231 | traces | traces | 8 | 350 | 16.13 | 13.08 | 0.00 | 1.23 | 487.41 | 20.42 |
| 34 | 1.34 | 0.34 | 225 | traces | traces | 20 | 100 | 17.51 | 13.51 | 0.19 | 1.29 | 483.81 | 18.68 |
| 35 | 1.27 | 0.35 | 235 | traces | traces | 12 | 200 | 17.87 | 13.44 | 0.60 | 1.32 | 482.65 | 27.77 |
| 36 | 1.31 | 0.36 | 169 | 15 | 20 | 28 | 50 | 24.22 | 14.64 | 0.31 | 1.65 | 488.51 | 4.80 |
| 37 | 1.25 | 0.37 | 177 | traces | traces | 26 | 100 | 23.37 | 14.03 | 1.05 | 1.66 | 489.15 | 8.44 |
| 38 | 1.29 | 0.32 | 228 | traces | traces | 13 | 80 | 20.34 | 15.63 | 0.28 | 1.30 | 483.04 | 24.17 |
| 39 | 1.32 | 0.29 | 223 | traces | traces | 13 | 200 | 22.59 | 17.69 | 0.14 | 1.27 | 483.48 | 21.52 |

**TABLEAU IIb**

| N° ex. | Fe2O3 (%) | FeO (%) | Co (ppm) | Cr2O3 (ppm) | V2O5 (ppm) | CeO2 (%) | MnO2 (ppm) | TLA4 (%) | TE4 (%) | TUV4 (%) | SE4 | λD (nm) | P (%) |
|---|---|---|---|---|---|---|---|---|---|---|---|---|---|
| 40 | 1.20 | 0.37 | 52 | traces | traces | 0.047 | 300 | 47.47 | 25.84 | 8.65 | 1.83 | 489.46 | 15.29 |
| 41 | 1.15 | 0.35 | 65 | 38 | 29 | 0.239 | 250 | 44.35 | 25.18 | 7.40 | 1.76 | 488.84 | 16.57 |
| 42 | 1.71 | 0.45 | 128 | 27 | traces | 0.482 | 150 | 24.73 | 13.83 | 1.80 | 1.78 | 489.65 | 19.52 |
| 43 | 1.45 | 0.39 | 112 | 38 | traces | 0.244 | 100 | 33.63 | 20.72 | 5.60 | 1.62 | 488.37 | 19.27 |
| 44 | 1.83 | 0.38 | 145 | 40 | 50 | 0.245 | 50 | 26.65 | 16.82 | 1.34 | 1.58 | 489.12 | 19.46 |
| 45 | 1.21 | 0.29 | 75 | traces | traces | 0.243 | 100 | 46.03 | 29.14 | 6.54 | 1.57 | 488.28 | 15.08 |

**TABLEAU IIc**

| N° ex. | Fe2O3 (%) | FeO (%) | Co (ppm) | V2O5 (ppm) | Cr2O3 (ppm) | Se (ppm) | TiO2 (%) | MnO2 (ppm) | TLA4 (%) | TE4 (%) | TUV4 (%) | SE4 | λD (nm) | P (%) |
|---|---|---|---|---|---|---|---|---|---|---|---|---|---|---|
| 46 | 1,49 | 0,37 | 211 | traces | traces | 8 | 1,03 | 100 | 16,30 | 13,05 | 0,00 | 1,24 | 485,11 | 24,60 |
| 47 | 1,35 | 0,29 | 195 | traces | traces | 5 | 0,95 | 250 | 25,13 | 20,08 | 1,37 | 1,25 | 484,88 | 23,00 |
| 48 | 1,52 | 0,32 | 175 | traces | traces | traces | 1,12 | 50 | 27,18 | 18,70 | 0,31 | 1,45 | 487,10 | 21,40 |

## TABLEAU IId

| N° ex. | Fe2O3 (%) | FeO (%) | Co (ppm) | Cr2O3 (ppm) | V2O5 (ppm) | MnO2 (ppm) | TLA4 (%) | TE4 (%) | TUV4 (%) | SE4 | $\lambda_D$ (nm) | P (%) |
|---|---|---|---|---|---|---|---|---|---|---|---|---|
| 49 | 1.26 | 0.33 | 67 | 77 | 7 | 100 | 42.70 | 25.47 | 7.60 | 1.67 | 488.90 | 16.84 |
| 50 | 1.44 | 0.32 | 92 | 5 | 410 | 200 | 37.17 | 23.47 | 3.70 | 1.58 | 489.20 | 16.81 |
| 51 | 1.27 | 0.31 | 78 | 89 | 312 | 300 | 40.69 | 25.57 | 6.10 | 1.59 | 489.20 | 16.59 |
| 52 | 1.29 | 0.31 | 67 | 74 | 7 | 400 | 43.43 | 26.77 | 7.20 | 1.62 | 489.20 | 15.78 |
| 53 | 1.28 | 0.32 | 67 | 81 | 7 | 250 | 42.91 | 25.97 | 7.20 | 1.65 | 489.20 | 16.22 |
| 54 | 1.28 | 0.29 | 68 | 77 | 7 | 100 | 43.64 | 27.27 | 7.00 | 1.59 | 489.40 | 15.37 |
| 55 | 1.28 | 0.32 | 67 | 79 | 7 | 50 | 43.17 | 26.17 | 7.10 | 1.64 | 489.40 | 15.79 |
| 56 | 1.27 | 0.32 | 60 | 81 | 7 | 50 | 43.37 | 26.07 | 7.00 | 1.66 | 489.40 | 15.87 |
| 57 | 1.27 | 0.30 | 76 | 102 | 326 | 75 | 41.05 | 25.77 | 6.00 | 1.59 | 489.70 | 15.99 |
| 58 | 1.15 | 0.35 | 70 | 10 | 50 | 100 | 42.66 | 24.78 | 8.30 | 1.72 | 486.17 | 20.73 |
| 59 | 1.16 | 0.38 | 50 | traces | traces | 200 | 44.83 | 24.00 | 8.49 | 1.86 | 487.46 | 18.47 |
| 60 | 1.15 | 0.37 | 27 | traces | 15 | 250 | 49.55 | 26.06 | 8.60 | 1.90 | 490.04 | 14.03 |
| 61 | 1.20 | 0.37 | 51 | traces | 22 | 100 | 44.95 | 24.73 | 8.32 | 1.81 | 488.48 | 16.73 |
| 62 | 1.12 | 0.42 | 18 | 15 | traces | 50 | 47.79 | 22.67 | 9.61 | 2.10 | 490.70 | 14.50 |
| 63 | 1.14 | 0.41 | 36 | traces | traces | 75 | 45.42 | 22.62 | 9.27 | 2.00 | 488.80 | 17.11 |
| 64 | 1.12 | 0.42 | 44 | traces | traces | 100 | 43.32 | 21.28 | 9.50 | 2.03 | 487.72 | 19.43 |
| 65 | 1.12 | 0.36 | 52 | traces | traces | 300 | 45.50 | 25.27 | 9.19 | 1.80 | 487.48 | 18.07 |
| 66 | 1.14 | 0.32 | 68 | traces | traces | 250 | 44.95 | 27.28 | 8.70 | 1.64 | 486.58 | 18.68 |
| 67 | 1.401 | 0.36 | 70 | 5 | 100 | 100 | 40.78 | 23.63 | 5.39 | 1.72 | 489.49 | 15.91 |

EP 1 140 718 B1

| N° ex. | Fe2O3 (%) | FeO (%) | Co (ppm) | Cr2O3 (ppm) | V2O5 (ppm) | MnO2 (ppm) | TLA4 (%) | TE4 (%) | TUV4 (%) | SE4 | $\lambda_D$ (nm) | P (%) |
|---|---|---|---|---|---|---|---|---|---|---|---|---|
| 68 | 1.45 | 0.47 | 80 | 96 | 12 | 100 | 32.30 | 15.63 | 5.33 | 2.06 | 489.23 | 20.36 |
| 69 | 1.42 | 0.34 | 95 | 23 | 92 | 50 | 36.79 | 23.02 | 5.01 | 1.59 | 487.65 | 19.22 |
| 70 | 1.51 | 0.36 | 65 | traces | 15 | 100 | 35.54 | 21.48 | 3.12 | 1.65 | 488.43 | 18.25 |
| 71 | 1.48 | 0.37 | 55 | 32 | traces | 50 | 36.75 | 21.62 | 3.62 | 1.69 | 489.52 | 17.12 |
| 72 | 1.55 | 0.49 | 50 | traces | traces | 75 | 33.09 | 16.90 | 3.38 | 1.95 | 489.12 | 19.89 |
| 73 | 1.40 | 0.49 | 27 | traces | traces | 150 | 37.53 | 18.53 | 4.79 | 2.02 | 489.44 | 18.90 |
| 74 | 1.40 | 0.40 | 95 | traces | traces | 200 | 35.46 | 20.84 | 4.38 | 1.70 | 485.81 | 23.57 |
| 75 | 1.39 | 0.38 | 102 | traces | traces | 250 | 35.57 | 21.52 | 4.45 | 1.65 | 485.26 | 24.11 |
| 76 | 1.55 | 0.36 | 80 | 10 | 25 | 100 | 37.19 | 21.94 | 3.04 | 1.69 | 489.61 | 16.28 |
| 77 | 1.61 | 0.38 | 125 | 31 | 28 | 50 | 29.31 | 18.56 | 2.45 | 1.57 | 486.34 | 23.86 |
| 78 | 1.78 | 0.44 | 116 | traces | 98 | 100 | 26.82 | 15.42 | 1.06 | 1.73 | 488.15 | 21.63 |
| 79 | 1.69 | 0.34 | 137 | 31 | traces | 150 | 27.91 | 18.74 | 1.67 | 1.48 | 486.30 | 23.49 |
| 80 | 1.75 | 0.31 | 165 | 17 | 36 | 50 | 24.05 | 17.93 | 0.85 | 1.34 | 484.95 | 26.81 |
| 81 | 1.27 | 0.42 | 74 | traces | traces | 75 | 38.90 | 22.20 | 8.25 | 1.75 | 485.80 | 22.90 |
| 82 | 1.24 | 0.44 | 81 | traces | traces | 100 | 36.94 | 20.86 | 7.75 | 1.77 | 485.50 | 24.33 |
| 83 | 1.27 | 0.39 | 71 | traces | traces | 150 | 40.72 | 23.55 | 8.18 | 1.73 | 486.40 | 20.87 |
| 84 | 1.29 | 0.33 | 90 | traces | 25 | 1000 | 36.18 | 23.50 | 6.44 | 1.54 | 489.52 | 11.28 |
| 85 | 1.35 | 0.45 | 81 | 15 | traces | 1250 | 33.60 | 17.15 | 6.37 | 1.96 | 488.72 | 16.35 |
| 86 | 1.15 | 0.34 | 161 | 18 | 21 | 789 | 24.76 | 19.63 | 54.99 | 1.26 | 486.47 | 14.01 |
| 87 | 1.51 | 0.35 | 244 | traces | traces | 1200 | 20.00 | 15.63 | 2.73 | 1.28 | 480.76 | 31.63 |
| 88 | 1.41 | 0.40 | 98 | traces | 225 | 1250 | 34.05 | 20.19 | 3.38 | 1.69 | 487.38 | 20.77 |

**Revendications**

1. Verre coloré sodo-calcique à nuance bleue composé de constituants principaux formateurs de verre dont plus de 2% d'oxyde de magnésium et d'agents colorants, **caractérisé en ce qu'**il contient plus de 1.1% en poids de Fe2O3, moins de 0.53% en poids de FeO, moins de 0.13% d'oxyde de manganèse, possède une transmission lumineuse (TLA4) comprise entre 15% et 70%, une sélectivité (SE4) supérieure à 1.2 et présente une longueur d'onde dominante ($\lambda_D$) et une pureté d'excitation (P) telles qu'elles se situent dans un diagramme trichromatique CIE 1931 à l'intérieur d'un triangle dont les sommets sont définis par le point représentant la source d'illuminant C et les points dont les coordonnées ($\lambda_D$, P) sont respectivement (490,19) et (476, 49).

2. Verre coloré selon la revendication 1, **caractérisé en ce qu'**il présente une longueur d'onde dominante inférieure à 489 nm, et/ou une pureté (P) supérieure à 12%.

3. Verre coloré selon l'une quelconque des revendications 1 à 2, caractérisé en cequ'il présente une TUV4 inférieure à 10%.

4. Verre coloré selon l'une quelconque des revendications 1 à 3, **caractérisé en ce qu'**il présente une valeur rédox inférieure à 41%.

5. Verre coloré selon l'une quelconque des revendications 1 à 4, **caractérisé en ce qu'**il comprend en tant qu'agents colorants l'un au moins des éléments Cr, Co, Se, Ce, V, Ti.

6. Verre coloré selon l'une quelconque des revendications 1 à 5, **caractérisé en ce qu'**il possède une longueur d'onde dominante ($\lambda_D$) et une pureté d'excitation (P) telles qu'elles se situent dans un diagramme trichromatique CIE 1931 à l'intérieur d'un triangle dont les sommets sont définis par le point représentant la source d'illuminant C et les points dont les coordonnées ($\lambda_D$, P) sont respectivement (490,19) et (480,38).

7. Verre coloré selon l'une quelconque des revendications 1 à 6, caractéridé en ce qu'il offre une sélectivité (SE4) supérieure à 1.6.

8. Verre coloré selon l'une quelconque des revendications 1 à 7, **caractérisé en ce qu'**il comprend les pourcentages en poids en agents colorants suivants, la quantité totale de fer étant exprimée sous forme de $Fe_2O_3$:

| | |
|---|---|
| $Fe_2O_3$ | 1.2 à 1.6 % |
| FeO | 0.34 à 0.50 % |
| Co | 0.0030 à 0.0100 % |
| $Cr_2O_3$ | 0 à 0.0200 % |
| $V_2O_5$ | 0 à 0.0500 % |
| Se | 0 à 0.0020 % |
| $CeO_2$ | 0 à 0.5 % |
| TiO2 | 0 à 1.5 % |

9. Verre coloré selon la revendications 8, **caractérisé en ce qu'**il comprend les pourcentages en poids en agents colorants suivants, la quantité totale de fer étant exprimée sous forme de $Fe_2O_3$:

| | |
|---|---|
| $Fe_2O_3$ | 1.2 à 1.5 % |
| FeO | 0.34 à 0.45 % |
| Co | 0.0030 à 0.0100 % |
| $Cr_2O_3$ | 0 à 0.0150 % |
| $V_2O_5$ | 0 à 0.0400 % |

10. Verre coloré selon l'une quelconque des revendications 8 ou 9, **caractérisé en ce qu'**il présente les propriétés optiques suivantes:
    35 % < TLA4 < 45 %
    20 % < TE4 < 30 %
    TUV4 < 9 %

$\lambda_D$ > 483 nm

P > 12 %

**11.** Verre coloré selon les revendications 1 à 5, **caractérisé en ce qu'**il comprend les pourcentages en poids en agents colorants suivants, la quantité totale de fer étant exprimée sous forme de $Fe_2O_3$:

| $Fe_2O_3$ | 1.3 à 1.8 % |
|---|---|
| FeO | 0.30 à 0.50 % |
| Co | 0.0160 à 0.0270 % |
| $Cr_2O_3$ | 0 à 0.0200 % |
| $V_2O_5$ | 0 à 0.0500 % |
| Se | 0 à 0.0040 % |
| $CeO_2$ | 0 à 0.5 % |

**12.** Verre coloré selon la revendication 11, **caractérisé en ce qu'**il présente les propriétés optiques suivantes:

16 % < TLA4 < 24%

12 % < TE4 < 18 %

TUV4 < 5 %

476 < $\lambda_D$ < 483 nm

P> 18 %

**13.** Verre coloré selon l'une quelconque des revendications 1 à 12, **caractérisé en ce qu'**il forme un vitrage pour automobile.

**Claims**

**1.** Soda-lime glass with a blue hue composed of the main glass-forming constituents, including more than 2% magnesium oxide, and colouring agents, **characterised in that** it contains more than 1.1% by weight of $Fe_2O_3$, less than 0.53% by weight of FeO, less than 0.13% of manganese oxide, has a light transmission (TL4) in the range of between 15% and 70%, a selectivity (SE4) greater than 1.2, and has a dominant wavelength ($\lambda_D$) and an excitation purity (P) such as , in a 1931 CIE trichromatic diagram, they are located inside a triangle, wherein the angles are defined by the point representing illuminant C and the points, of which the coordinates ($\lambda_D$, P) are (490, 19) and (476, 49) respectively.

**2.** Coloured glass according to Claim 1, **characterised in that** it has a dominant wavelength of less than 489 nm and/or a purity (P) greater than 12%.

**3.** Coloured glass according to either one of Claims 1 or 2, **characterised in that** it has a TUV4 of less than 10%.

**4.** Coloured glass according to any one of Claims 1 to 3, **characterised in that** it has a redox value of less than 41%.

**5.** Coloured glass according to any one of Claims 1 to 4, **characterised in that** it contains at least one of the elements Cr, Co, Se, Ce, V, Ti as colouring agents.

**6.** Coloured glass according to any one of Claims 1 to 5, **characterised in that** it has a dominant wavelength ($\lambda_D$) and an excitation purity (P) such as , in a 1931 CIE trichromatic diagram, they are located inside a triangle, wherein the angles are defined by the point representing illuminant C and the points, of which the coordinates ($\lambda_D$, P) are (490, 19) and (480, 38) respectively.

**7.** Coloured glass according to any one of Claims 1 to 6, **characterised in that** it has a selectivity (SE4) greater than 1.6.

**8.** Coloured glass according to any one of Claims 1 to 7, **characterised in that** it comprises the following colouring agents expressed in percentages by weight, the total quantity of iron being expressed in the form of $Fe_2O_3$:

| | |
|---|---|
| $Fe_2O_3$ | 1.2 to 1.6% |
| FeO | 0.34 to 0.50% |
| Co | 0.0030 to 0.0100% |
| $Cr_2O_3$ | 0 to 0.0200% |
| $V_2O_5$ | 0 to 0.0500% |
| Se | 0 to 0.0020% |
| $CeO_2$ | 0 to 0.5% |
| $TiO_2$ | 0 to 1.5%. |

9. Coloured glass according to Claim 8, **characterised in that** it comprises the following colouring agents expressed in percentages by weight, the total quantity of iron being expressed in the form of $Fe_2O_3$:

| | |
|---|---|
| $Fe_2O_3$ | 1.2 to 1.5% |
| FeO | 0.34 to 0.45% |
| Co | 0.0030 to 0.0100% |
| $Cr_2O_3$ | 0 to 0.0150% |
| $V_2O_5$ | 0 to 0.0400%. |

10. Coloured glass according to either one of Claims 8 or 9, **characterised in that** it has the following optical properties:
   35% < TLA4 < 45%
   20% < TE4 < 30%
   TUV4 < 9%
   $\lambda_D$ > 483 nm
   P > 12%.

11. Coloured glass according to any one of Claims 1 to 5, **characterised in that** it comprises the following colouring agents expressed in percentages by weight, the total quantity of iron being expressed in the form of $Fe_2O_3$:

| | |
|---|---|
| $Fe_2O_3$ | 1.3 to 1.8% |
| FeO | 0.30 to 0.50% |
| Co | 0.0160 to 0.0270% |
| $Cr_2O_3$ | 0 to 0.0200% |
| $V_2O_5$ | 0 to 0.0500% |
| Se | 0 to 0.0040% |
| $CeO_2$ | 0 to 0.5%. |

12. Coloured glass according to Claim 11, **characterised in that** it has the following optical properties:
   16% < TLA4 < 24%
   12% < TE4 < 18%
   TUV4 < 5%
   476 < $\lambda_D$ < 483 nm
   P > 18%.

13. Coloured glass according to any one of Claims 1 to 12, **characterised in that** it forms a glazing for motor vehicles.

**Patentansprüche**

1. Farbiges Natronkalkglas mit Blaustich, das aus Hauptbestandteilen, die glasbildend sind, zusammengesetzt ist und von denen mehr als 2% Magnesiumoxid und Färebemittel sind, **dadurch gekennzeichnet, dass** es mehr als 1,1 Gew% $Fe_2O_3$, weniger als 0,53 Gew% FeO und weniger als 0,13% Manganoxid enthält und eine Lichttransmission (TLA4), die einen Bereich zwischen 15% und 70% umfaßt, eine Selektivität (SE4) von mehr als 1,2 aufweist und eine dominierende Wellenlänge ($\lambda D$) und eine Anregungsreinheit (P) aufweist, so dass sie in einem trichromatischen Diagramm CIE 1931 im Innem eines Dreiecks zu liegen kommen, dessen Spitzen über den Punkt, der die Strahlungsquelle C darstellt, und über die Punkte, deren Koordinaten (λD, P) (490,19) bzw. (476,49) sind, definiert sind.

**2.** Farbiges Glas gemäß Anspruch 1, **dadurch gekennzeichnet, dass** es eine dominierende Wellenlänge von weniger als 489 nm und/oder eine Reinheit (P) von mehr als 12% aufweist.

**3.** Farbiges Glas nach einem der Ansprüche 1 bis 2, **dadurch gekennzeichnet, dass** es einen TUV4 Wert von weniger als 10% aufweist.

**4.** Farbiges Glas nach einem der Ansprüche 1 bis 3, **dadurch gekennzeichnet, dass** es einen Redoxwert von weniger als 41% aufweist.

**5.** Farbiges Glas nach einem der Ansprüche 1 bis 4, **dadurch gekennzeichnet, dass** es als Färbemittel wenigstens eines der Elemente Cr, Co, Se, Ce, V und Ti umfasst.

**6.** Farbiges Glas nach einem der Ansprüche 1 bis 5, **dadurch gekennzeichnet, dass** es eine dominierende Wellenlänge ($\lambda_D$) und eine Anregungsreinheit (P) aufweist, so dass sie in einem trichromatischen Diagramm CIE 1931 im Innern eines Dreiecks zu liegen kommen, dessen Spitzen über den Punkt, der die Strahlungsquelle darstellt, und über die Punkte, deren Koordinaten (λD, P) (490,19) bzw. (480,38) sind, definiert sind.

**7.** Farbiges Glas nach einem der Ansprüche 1 bis 6, **dadurch gekennzeichnet, dass** es eine Selektivität (SE4) von mehr als 1,6 aufweist.

**8.** Farbiges Glas nach einem der Ansprüche 1 bis 7, **dadurch gekennzeichnet, dass** es die folgenden Gewichtsprozentgehalte an Färbemitteln aufweist, wobei die Gesamtmenge an Eisen als $Fe_2O_3$ ausgedrückt ist:

| | |
|---|---|
| $Fe_2O_3$ | 1,2 bis 1,6% |
| FeO | 0,34 bis 0,50 % |
| Co | 0,0030 bis 0,0100% |
| $Cr_2O_3$ | 0 bis 0,0200% |
| $V_2O_5$ | 0 bis 0,0500% |
| Se | 0 bis 0,0020% |
| $CeO_2$ | 0 bis 0,5% |
| $TiO_2$ | 0 bis 1,5% |

**9.** Farbiges Glas nach Anspruch 8, **dadurch gekennzeichnet, dass** es die folgenden Gewichtsprozentgehalte an Färbemittteln aufweist, wobei die Gesamtmenge an Eisen als $Fe_2O_3$ ausgedrückt ist:

| | |
|---|---|
| $Fe_2O_3$ | 1,2 bis 1,5% |
| FeO | 0,34 bis 0,45 % |
| Co | 0,0030 bis 0,0100% |
| $Cr_2O_3$ | 0 bis 0,0150% |
| $V_2O_5$ | 0 bis 0,0400% |

**10.** Farbiges Glas nach einem der Ansprüche 8 oder 9, **dadurch gekennzeichnet, dass** es die folgenden optischen Eigenschaften aufweist:

35% < TLA4 < 45%
20% < TE4 < 30%
TUV4 < 9%
$\lambda_D$ > 483 nm
P > 12%

**11.** Farbiges Glas nach den Ansprüchen 1 bis 5, **dadurch gekennzeichnet, dass** es die folgenden Gewichtsprozentgehalte an Färbemitteln aufweist, wobei die Gesamtmenge an Eisen als $Fe_2O_3$ ausgedrückt ist:

| | |
|---|---|
| $Fe_2O_3$ | 1,3 bis 1,8% |
| FeO | 0,30 bis 0,50 % |
| Co | 0,0160 bis 0,0270% |
| $Cr_2O_3$ | 0 bis 0,0200% |
| $V_2O_5$ | 0 bis 0,0500% |
| Se | 0 bis 0,0040% |
| $CeO_2$ | 0 bis 0,5% |

**12.** Farbiges Glas nach Anspruch 11, **dadurch gekennzeichnet, dass** es die folgenden optischen Eigenschaften aufweist:

16% < TLA4 < 24%
12% < TE4 < 18%
TUV4 < 5%
476 < $\lambda_D$ < 483 nm
P > 18%

**13.** Farbiges Glas nach einem der Ansprüche 1 bis 12, **dadurch gekennzeichnet, dass** es eine Automobilverglasung bildet.